Europäisches Patentamt

European Patent Office

Office européen des brevets

(19)

(11) Veröffentlichungsnummer: **0 068 449**
**B1**

(12) **EUROPÄISCHE PATENTSCHRIFT**

(45) Veröffentlichungstag der Patentschrift:
24.07.85

(51) Int. Cl.⁴: **E 02 B 8/02**, B 01 D 35/28,
B 01 D 29/38

(21) Anmeldenummer: **82105572.0**

(22) Anmeldetag: **24.06.82**

(54) **Vorrichtung zur Reinigung eines Siebes oder eines Rechens.**

(30) Priorität: **01.07.81 CH 4346/81**

(43) Veröffentlichungstag der Anmeldung:
**05.01.83 Patentblatt 83/1**

(45) Bekanntmachung des Hinweises auf die Patenterteilung:
**24.07.85 Patentblatt 85/30**

(84) Benannte Vertragsstaaten:
**AT DE FR**

(56) Entgegenhaltungen:
**CH - A - 590 980**
**DE - C - 954 947**
**FR - A - 2 449 487**

**SCHWEIZERISCHE BAUZEITUNG, Band 9, 26. Februar 1981, Seiten 175-180, Zürich, CH.**

(73) Patentinhaber: **Nill, Werner, Eigenheimweg 45, CH-8400 Winterthur (CH)**

(72) Erfinder: **Nill, Walter, Rudolf-Diesel-Strasse 2, CH-8404 Winterthur (CH)**

(74) Vertreter: **Gachnang, Hans Rudolf, Algisserstrasse 33, CH-8500 Frauenfeld (CH)**

## Beschreibung

Die Erfindung bezieht sich auf eine Vorrichtung zur Reinigung eines Siebes oder Rechens der im Oberbegriff des Anspruchs 1 beschriebenen Art.

In Abwassereinrichtungen, beispielsweise in Regenauslässen, werden häufig Siebe und Rechen eingesetzt. Um eine Verlegung derselben zu verhindern, müssen an ihnen haftenden Ablagerungen periodisch entfernt werden. Dies geschieht durch Wegkratzen der Ablagerungen oder durch Abspritzen mit Druckwasser, wozu oftmals ein Ausbauen nötig ist. Dies sind jedoch sehr arbeitsintensive Verfahren, die zudem einen vielfach ungenügenden Reinigungseffekt zeitigen. So verlagert sich die thixotrope Ablagerung, z.B. von Klärschlamm, von der gerade gereinigten Stelle auf eine andere Stelle des Siebes, oder sie weicht vorübergehend fliessend aus und kehrt erstarrend wieder zurück. Zudem müssen die vom Sieb entfernten Ablagerungen in einem weiteren Arbeitsgang weggefördert werden.

Aufgabe der Erfindung ist es, eine Vorrichtung zu zeigen, mit welcher Siebe oder Rechen schnell und wirksam und in Betriebslage gereinigt werden können.

Erfindungsgemäss wird dies dadurch gelöst, dass höher als das Sieb oder der Rechen eine Spülkippe angeordnet ist, um einen Schwall eines fliessenden Mediums zu erzeugen, der auf die hauptsächlich nicht verschmutzte Seite des Siebes oder Rechens auftrifft und durch das Sieb oder den Rechen hindurchfliesst, wobei die auf die Sieb- oder Rechenebene projizierte Fläche des Schwalls im wesentlichen der Sieb- oder Rechenfläche entspricht und wobei das Sieb oder der Rechen auf seiner hauptsächlich nicht verschmutzten Seite eine Umrandung aufweist.

Dabei können die Ablagerungen durch das Spülmedium abtransportiert werden und die Reinigung in äusserst kurzer Zeit, wie Versuche zeigten, in etwa 20 Sekunden durchgeführt werden.

Bei einer bevorzugten Vorrichtung in Abwassereinrichtungen wird die Spülkippe mit Wasser gefüllt. Der im Fall kinetische Energie aufnehmende Wasserschwall gelangt, gegebenenfalls durch Umlenken mittels eines Umlenkbleches, etwa senkrecht auf die Siebfläche. Der Wasserschwall wirkt beinahe gleichzeitig über die ganze Siebfläche, was den meist thixotropen Ablagerungen nicht erlaubt, auf der Siebfläche auszuweichen oder sich zu verlagern; vielmehr werden sie als Gesamtes durch das Wasser des Wasserschwalls aus ihrem inneren Zusammenhalt gelöst, mitgerissen und anschliessend fortgeschwemmt. Durch die Umrandung wird ein nutzloses Abfliessen des Wassers verhindert und ein Verlust des sich aufbauenden statischen Wasserdruckes vermieden und eine grosse Energiedichte über dem Sieb erzeugt. Besonders günstig ist es, wenn die Umrandung in Umfangsrichtung vollkommen geschlossen und druckfest ist.

Die Höhe des freien Falles wird vorzugsweise so gewählt, dass der Wasserschwall einerseits nicht in Tropfen aufgelöst wird, was bei zu grosser Fallhöhe geschieht, andererseits ausreichend kinetische Energie aufweist. Es hat sich in Versuchsreihen gezeigt, dass die Vorrichtung besonders bei Sieben kleiner Maschenweite eine gute Reinigungswirkung entfaltet, so dass bei der Wahl der Maschenweite des Siebes allein die Forderungen der Siebwirkung der Abwassereinrichtung zu berücksichtigen sind und jene der Siebreinigung ausser acht gelassen werden können. Pro m² Siebfläche sind etwa 700 kg Spülmedium erforderlich, d.h. 1500 bis 3000 mkg Arbeitsinhalt (Versuchsergebnis). Zur Erzeugung eines Wasserschwalls mit ausreichendem Volumen in sehr kurzer Zeit haben sich Spülkippen in anderem Zusammenhang bewährt. So sind solche zur Reinigung der Sohle von Regenbecken und Kläranlagen in der CH-A 590 980 und in der DE-A 29 10 523 vorgeschlagen worden.

Aus der Zeitschrift «Schweizerische Bauzeitung», Heft 9/81 vom 26. Februar 1981, Seiten 178–180, Abbildungen 14, 15 und 16, ist schon eine Vorrichtung zur Reinigung eines Rechens mit einer Spülkippe bekanntgeworden. Aus den Abbildungen und dem Text geht jedoch das für die Reinigungswirkung entscheidende Verhältnis der auf die Rechenebene projizierten Fläche des Schwalles und der Rechenfläche nicht hervor, denn, wie vorn erwähnt, muss zur Erzielung der erwünschten Reinigungswirkung der Wasserschwall praktisch gleichzeitig auf im wesentlichen die ganze Rechenfläche wirken, damit die Ablagerungen nicht ausweichen können oder sich verlagern und an einer anderen Stelle des Rechens haften bleiben. Ferner weist die Anordnung gemäss der genannten Zeitschrift auch keinen Rahmen auf, der verhindert, dass der Schwall ausweichen kann.

Auch kann die Energiebilanz, welche die Grundlage für die Arbeitsleistung der Schmutzablösung und dessen Transport ist, nicht ersehen werden.

Der Zusammenhang mit der Erkenntnis der Thixotropie der Siebrückstände, die eine solche Spülvorrichtung bedingt, ist nicht erkennbar. So wenig wie das Reflektionsphänomen der Fläche unter dem Sieb, das bei Versuchen festgestellt wurde.

Im folgenden ist anhand der beiliegenden Zeichnung die Erfindung beispielsweise beschrieben. Es zeigt:

Fig. 1 eine Mischwasseranlage mit darin angeordneter Vorrichtung zur Siebreinigung und die

Fig. 2 bis 4 modifizierte Vorrichtung zur Siebreinigung.

Über einen Zufluss 1 gelangt Mischwasser in die Anlage. Ein Sumpf 2 führt zu einer Abwasserreinigungsanlage. Zwischen einer Tauchwand 3 und einer Überfallschwelle 4 ist ein Sieb 5 angeordnet. Die Tauchwand 3 und die Überfallschwelle 4 bilden Teile einer Umrandung des Siebes 5. Ein Ablauf 6 führt zum Vorfluter. An einer Decke 7 der Anlage ist mittels Trägern 9 eine Spülkippe 8 montiert. Diese ist um eine Achse 10 schwenkbar. Die Spülkippe 8 ist so angeordnet, dass der Wasserschwall, der erzeugt wird, wenn die Kippe sich entleert, im freien Fall direkt auf das Sieb 5 auftrifft. Die Umrandung des Siebes ist so bemessen, dass sie das gesamte Volumen des Schwalls aufnehmen kann, um das Wasser zu zwingen, durch das Sieb hindurchzufliessen und Wasser- und Energieverluste zu vermeiden.

Fliesst durch den Zufluss 1 eine grosse Wassermenge in die Mischwasseranlage, so fliesst Wasser über die Überfallschwelle 4 und den Ablauf 6 direkt in den Vorfluter, wie dies die Pfeile in der Figur andeuten. Das in·den Ablauf 6 gelangende Wasser wird zuvor mittels des Siebes 5 gesiebt. Dabei entstehen mit der Zeit Ablagerungen 11, die namentlich auf der Zuflussseite des Siebes haften bleiben und den Durchströmwiderstand erheblich vergrössern oder gar zu einer Siebverlegung führen. Daher muss das Sieb periodisch gereinigt werden.

Die Spülkippe wird über eine Leitung in der Decke 7 mit Spülwasser gefüllt. Beim Füllen der Kippe wandert ihr Schwerpunkt über und geringfügig vor die Achse 10, so dass die Kippe abrupt schwenkt und das eingefüllte Wasser als Schwall ausfliesst. Durch geeignete Bemessung der Kippe wird ein Wasserschwall erzeugt, der auf die gesamte Fläche des Siebes 5 einwirkt. Die Umrandung verhindert, dass der Schwall ausweichen kann und zwingt das Wasser, das Sieb 5 zu durchströmen. Dadurch werden die Ablagerungen 11 vom Sieb gelöst und vom Spülwasser mitgerissen und durch den Sumpf 2 zur Abwasserreinigungsanlage geschwemmt. Durch den Sumpf fliesst stets ein kleiner Anteil Mischwasser zur Abwasserreinigungsanlage. Indem der Wasserschwall auf die gesamte Fläche des Siebes auftritt, kann vermieden werden, dass die meist thixotropen Ablagerungen lediglich ausweichen, jedoch am Sieb haften bleiben. Unterhalb des Siebes 5 ist ein genügend grosser freier Raum vorzusehen, z.B. durch Absenken des Wasserspiegels, damit die gelösten Ablagerungen mit dem Spülwasser frei abfliessen können und nicht vom unteren Wasserspiegel oder der unteren Bodenfläche reflektiert auf das Sieb 5 zurückprallen, und wie Versuche zeigten, durch das Sieb hindurch auf die Gegenseite gedrückt werden. Zur Konzentration des Wasserschwalls kann die Spülkippe 8 mit einem verstellbaren Leitblech versehen werden. Als bevorzugte Höhe, in welcher die Spülkippe 8 über dem Sieb 5 anzuordnen ist, hat sich in Versuchen ein Bereich zwischen etwa 3 und 5 m als günstig erwiesen; für die Höhe des freien Raumes (ab Wasserspiegel 20) unter dem Sieb etwa ¹⁄₁₀ davon.

Zur Erreichung des beschriebenen Reinigungseffektes sollte das Sieb 5 möglichst horizontal angeordnet sein, damit der Wasserschwall senkrecht auf das Sieb auftrifft. Bei Sieben, die schräg oder vertikal angeordnet sind, wird der Wasserschwall durch ein Umlenkblech, das unterhalb der Spülkippe angeordnet ist, verlustarm derart umgelenkt, dass der Wasserschwall senkrecht auf das Sieb auftrifft.

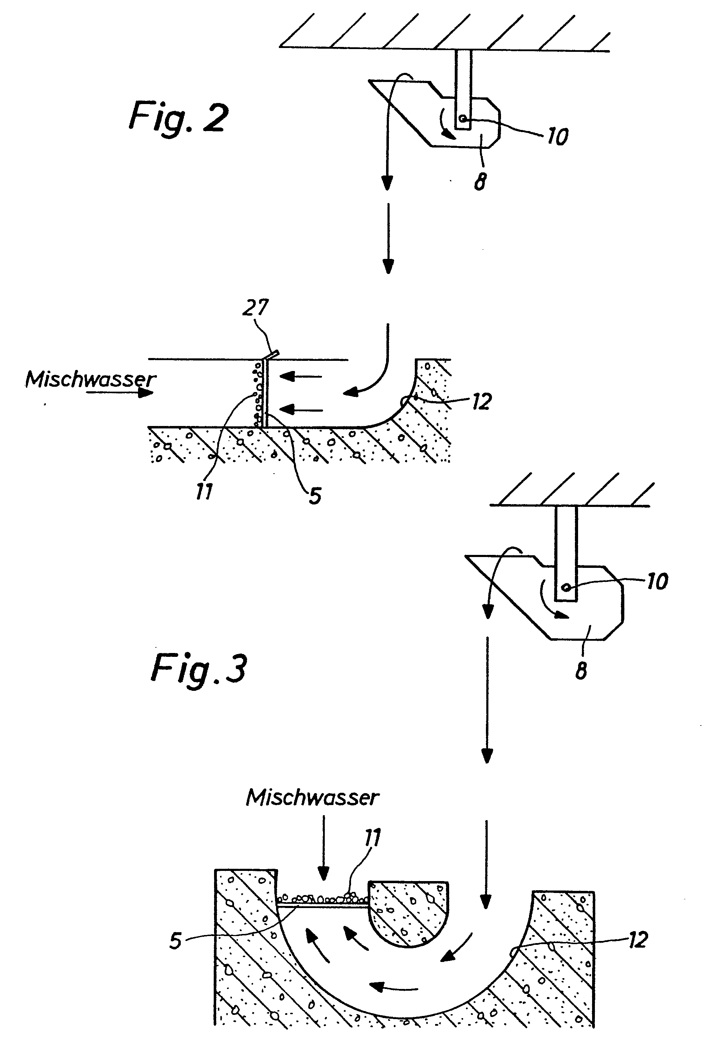

Wie aus den Fig. 2 und 3 hervorgeht, lässt sich durch einen Umlenkbogen 12 am Ende der Fallhöhe der Schwall beliebig umlenken und so bei senkrechten (Fig. 2), sonstwie geneigten oder von oben nach unten vom Mischwasser durchflossenen, horizontalen (Fig. 3) Sieben oder Rechen der senkrechte Auftritt des Schwalles auf die stromabwärts bezüglich der Strömungsrichtung des Mischwassers liegende Seite des Siebes 5 erzielen, was durch bauseitige Gegebenheiten bedingt sein kann. 27 ist Teil der Umrandung.

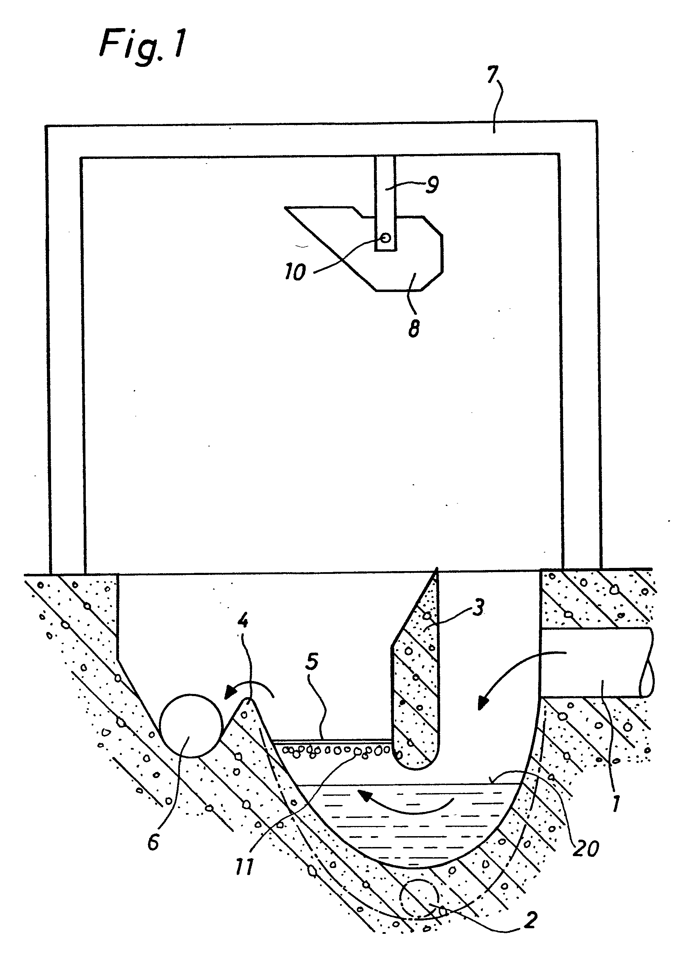

Dementsprechend fliesst beim speziellen Umlenkwinkel von 180° gemäss Fig. 3 das Mischwasser von oben nach unten, der Schwall von unten nach oben. Die Nutzfläche bleibt die gleiche wie beim Beispiel gemäss Fig. 1.

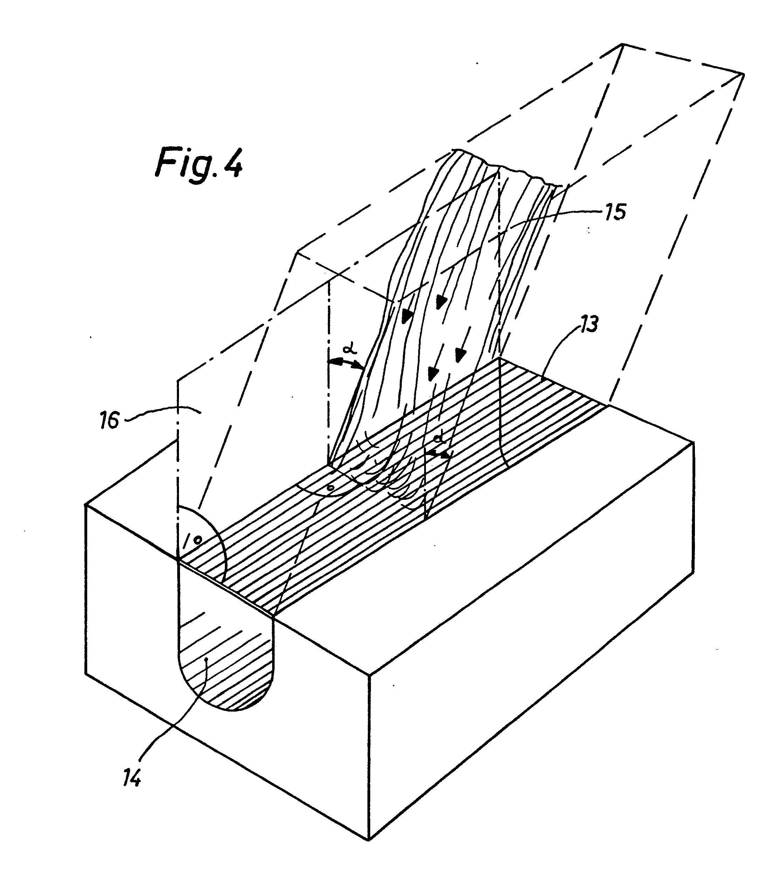

Die Fig. 4 stellt die Reinigung eines Rechens 13, der einen Mischwasserkanal 14 abdeckt, mittels eines Schwalles 15 dar. Die Anordnung ist derart, dass der Schwall 15 von zwei parallel zu den Rechenstäben verlaufenden, gedachten Bezugsebenen 16 begrenzt und unter einem spitzen Winkel $\alpha$ zur Rechenstabebene auf den Rechen 13 auftrifft.

In der Fig. 4 ist nur die eine der beiden Bezugsebenen 16 dargestellt.

Eine Komponente der Wasserkraft wirkt dann senkrecht, die andere wirkt längs des Siebes, was bei der Ausbildung als Rechensieb fadenartige Ablagerungen besser entfernt. Versuche ergaben bei Stadtabwasser ein Maximum der Reinigungswirkung bei $\alpha$ von 60°.

Bei der erfindungsgemässen Vorrichtung weist ein Spülmedium zu Beginn des Reinigungsvorganges bezüglich der Sieb- oder Rechenfläche eine Energie der Lage auf, die sich beim Herabfallen auf das Sieb oder den Rechen in Geschwindigkeitsenergie umwandelt. Beim Aufprallen auf das Sieb oder den Rechen wird die Geschwindigkeitsenergie teilweise in statische Druckenergie umgewandelt und unter Abgabe der Arbeit, die nötig ist, um die Schmutzteile vom Sieb oder Rechen zu lösen, erfolgt die Rückumwandlung in Bewegungsenergie und damit der Abfluss der Schmutzteile.

Die bei der erfindungsgemässen Vorrichtung eingesetzte Spülkippe kann in ihrem Aufbau und in ihrer Wirkungsweise etwa der in der CH-PS 590 980 gezeigten und beschriebenen Spülkippe entsprechen.

## Patentansprüche

1. Vorrichtung zur Reinigung eines Siebes oder Rechens, wobei höher als das Sieb (5) oder der Rechen eine Spülkippe (8) angeordnet ist, um einen Schwall eines fliessenden Mediums zu erzeugen, der auf die hauptsächlich nicht verschmutzte Seite des Siebes (5) oder Rechens auftrifft und durch das Sieb oder den Rechen hindurchfliesst, dadurch gekennzeichnet, dass die auf die Sieb- oder Rechenebene projizierte Fläche des Schwalls im wesentlichen der Sieb- oder Rechenfläche entspricht, und dass das Sieb (5) oder der Rechen auf seiner hauptsächlich nicht verschmutzten Seite eine Umrandung (3, 4) aufweist.

2. Vorrichtung nach Anspruch 1, dadurch gekennzeichnet, dass die Umrandung (3, 4) einen Raum umschliesst, dessen Volumen etwa so gross ist wie das Volumen des Schwalls.

3. Vorrichtung nach einem der Ansprüche 1 oder 2 zur Reinigung eines Siebes, dadurch gekennzeichnet, dass der Schwall im wesentlichen senkrecht auf die Siebebene auftrifft.

4. Vorrichtung nach einem der Ansprüche 1 oder 2 zur Reinigung eines Rechens, dadurch gekennzeichnet, dass der Schwall von zwei parallel zu den Rechenstäben verlaufenden, gedachten Bezugsebenen (16) begrenzt unter einem Winkel zwischen 0 bis 90° bezüglich der Rechenstabebene (Fig. 4) auf den Rechen auftrifft.

5. Vorrichtung nach einem der Ansprüche 1 bis 4, dadurch gekennzeichnet, dass die Spülkippe (8) zur Regulierung des Ausgussquerschnittes und der Auslaufzeit im Bereich der Öffnung der Spülkippe ein verstellbares Leitblech aufweist.

6. Vorrichtung nach einem der Ansprüche 1 bis 5, dadurch gekennzeichnet, dass zur verlustarmen Umlenkung des Schwalls senkrecht unterhalb der Spülkippe am Ende der Fallhöhe ein Umlenkblech angeordnet ist.

7. Vorrichtung nach einem der Ansprüche 1 bis 6, dadurch gekennzeichnet, dass das Medium, mit welchem der Schwall erzeugbar ist, den Erfordernissen des gesiebten Mediums angepasst ist.

8. Vorrichtung nach einem der Ansprüche 1 bis 7, dadurch gekennzeichnet, dass das Sieb oder der Rechen zur Siebung von verschmutztem Wasser dient.

9. Vorrichtung nach einem der Ansprüche 1 bis 8, dadurch gekennzeichnet, dass das Sieb oder der Rechen in einer Abwassereinrichtung angeordnet ist.

10. Vorrichtung nach einem der Ansprüche 1 bis 9, dadurch gekennzeichnet, dass der Schwall mit Wasser erzeugbar ist.

11. Vorrichtung nach einem der Ansprüche 1 bis 10, dadurch gekennzeichnet, dass die Spülkippe (8) etwa 3 bis 5 m über dem Sieb (5) liegt.

12. Vorrichtung nach Anspruch 1, dadurch gekennzeichnet, dass die Spülkippe (8) unmittelbar über dem Sieb (5) angeordnet ist.

13. Vorrichtung nach Anspruch 1, dadurch gekennzeichnet, dass die Gegenwand oder der Spiegel des strömenden Mediums unterhalb des Siebes einen Abstand von mindestens ⅒ der Fallhöhe zum Sieb aufweist.

## Claims

1. Device for cleaning a screen or grid, in which a sluicing dump (8) is disposed higher than the screen (5) or grid, in order to produce a gush in a flowing medium which impinges on to the mainly uncontaminated side of the screen (5) or grid, flowing through the screen (5) or grid, characterised in that the area of the gush projected on to the screen or grid plane corresponds substantially to the area of the screen or grid, and that the screen (5) or grid possesses a border (3, 4) on its mainly uncontaminated side.

2. Device according to claim 1, characterised in that the border (3, 4) encloses a space, the volume of which is approximately as large as that of the volume of the gush.

3. Device according to one of claims 1 or 2 for the cleaning of a screen, characterised in that the gush essentially impinges vertically on to the screen plane.

4. Device according to one of claims 1 or 2 for the cleaning of a grid, characterised in that the gush impinges on the grid limited by two imaginary reference planes (16) running parallel to the grid rods, at an angle of between 0 to 90° in respect of the grid rod plane.

5. Device according to one of claims 1 to 4, characterised in that the sluicing dump (8) possesses an adjustable guide – plate in the region of the sluicing dump orifice for the purpose of regulating the outlet cross-section and the outflow time.

6. Device according to one of claims 1 to 5, characterised in that a deflector plate is disposed vertically below the sluicing dump, at the bottom of the fall for the pupose of deflecting the gush with a low degree of loss.

7. Device according to one of claims 1 to 6, characterised in that the medium with which the gush can be produced is adapted to the requirements of the screened medium.

8. Device according to one of claims 1 to 7, characterised in that the screen or grid serves for the screening of contaminated water.

9. Device according to one of claims 1 to 8, characterised in that the screen or grid is disposed in a waste-water system.

10. Device according to one of claims 1 to 9, characterised in that the gush can be produced with water.

11. Device according to one of claims 1 to 10, characterised in that the sluicing dump (8) is mounted approximately 3 to 5 m above the screen (5).

12. Device according to claim 1, characterised in that the sluicing dump (8) is mounted directly above the screen (5).

13. Device according to claim 1, characterised that the counter-wall or reflection of the flowing medium below the screen is at a distance from the screen of at least ⅒ of the height of drop.

## Revendications

1. Dispositif pour le nettoyage d'un crible ou d'un râteau, dans lequel une benne de nettoyage (8) est disposée plus haut que le crible (5) ou le râteau, pour engendrer une grosse vague d'un agent coulant, qui rencontre la face, avant tout non encrassée du crible (5) ou du râteau et qui s'écoule à travers le crible ou le râteau, caractérisé par le fait que la surface projetée de la grosse vague sur le plan du tamis ou du râteau correspond essentiellement à la surface du crible, et que le crible (5) ou le râteau présente sur sa face, avant tout non encrassée, une bordure (3, 4).

2. Dispositif selon la revendication 1, caractérisé par le fait que la bordure (3, 4) entoure un espace, dont le volume est à peu près aussi grand que celui de la grosse vague.

3. Dispositif selon l'une des revendications 1 ou 2, pour le nettoyage d'un crible, caractérisé par le fait que la vague rencontre, pour l'essentiel, le plan du crible perpendiculairement.

4. Dispositif selon l'une des revendications 1 ou 2, pour le nettoyage d'un râteau, caractérisé par le fait que la vague délimitée par deux plans de référence (16) imaginaires parallèles aux barres du râteau, rencontre le râteau sous un angle compris entre 0 et 90° par rapport au plan des barres du râteau (Fig. 4).

5. Dispositif selon l'une des revendications 1 à 4, caractérisé par le fait que la benne de nettoyage (8) présente, dans la zone de l'ouverture de la benne, une tôle de guidage réglable pour régler la section de déversement et la durée d'écoulement.

6. Dispositif selon l'une des revendications 1 à 5, caractérisé par le fait qu'un déflecteur est disposé sous la benne de nettoyage, à la fin de la hauteur de chute, pour dévier la vague avec peu de pertes.

7. Dispositif selon l'une des revendications 1 à 6, caractérisé par le fait que l'agent avec lequel la vague peut être engendrée, est adapté aux exigences de l'agent criblé.

8. Dispositif selon l'une des revendications 1 à 7, caractérisé par le fait que le crible ou le râteau sert au filtrage d'eau polluée.

9. Dispositif selon l'une des revendications 1 à 8, caractérisé par le fait que le crible ou le râteau est installé dans une installation à eaux usées.

10. Dispositif selon l'une des revendications 1 à 9, caractérisé par le fait que la vague peut être produite avec de l'eau.

11. Dispositif selon l'une des revendications 1 à 10, caractérisé par le fait que la benne de nettoyage (8) se trouve à environ 3 à 5 m au-dessus du crible (5).

12. Dispositif selon la revendication 1, caractérisé par le fait que la benne de nettoyage (8) se trouve directement au-dessus du crible (5).

13. Dispositif selon la revendications 1, caractérisé par le fait que la contre-paroi ou le niveau du liquide qui s'écoule au-dessous du crible, présente une distance d'au moins $\frac{1}{10}$ de la hauteur de chute par rapport au crible.

Fig.1

*Fig. 2*

Mischwasser

*Fig.3*

Mischwasser

# Fig. 4